Europäisches Patentamt

European Patent Office

Office européen des brevets

(19)

(11) Numéro de publication: **0 318 627**
**A1**

## (12) DEMANDE DE BREVET EUROPÉEN

(21) Numéro de dépôt: **87810713.5**

(22) Date de dépôt: **03.12.87**

(51) Int. Cl.⁴: **G01M 1/06 , G01M 1/36**

(43) Date de publication de la demande:
**07.06.89 Bulletin 89/23**

(84) Etats contractants désignés:
**AT BE CH DE ES FR GB GR IT LI LU NL SE**

(71) Demandeur: **Linder, René**
**Piazza Baraini**
**CH-6852 Genestrerio(CH)**

(72) Inventeur: **Linder, René**
**Piazza Baraini**
**CH-6852 Genestrerio(CH)**

(74) Mandataire: **Seehof, Michel et al**
**c/o AMMANN PATENTANWAELTE AG BERN**
**Schwarztorstrasse 31**
**CH-3001 Bern(CH)**

(54) Dispositif pour entraîner les masses compensatrices d'équilibreurs dynamiques utilisés sur les rectifieuses et sur d'autres machines.

(57) Le dispositif comporte des turbines (76,78) montées à la périphérie d'un boîtier (30) et prévues pour entraîner des masses compensatrices disposées dans ce boîtier. Les turbines (76,78) sont commandées chacune par un jet de fluide sous pression (88-90) délivré par un distributeur (82) extérieur au boîtier mais à proximité de la périphérie de celui-ci, chaque turbine étant reliée à l'anneau correspondant par un train d'engrenage réducteur. Cette disposition permet d'éliminer les moteurs électriques habituellement utilisés dans les équilibreurs pour ajuster la position des anneaux.

FIG.2

EP 0 318 627 A1

Xerox Copy Centre

# DISPOSITIF POUR ENTRAINER LES MASSES COMPENSATRICES D'EQUILIBREURS DYNAMIQUES UTILISES SUR LES RECTIFIEUSES ET SUR D'AUTRES MACHINES

Dispositif pour entraîner au moins une masse compensatrice d'un équilibreur dynamique utilisé sur les rectifieuses et d'autres machines avec un arbre tournant supportant une charge, l'équilibreur comportant un boîtier monté sur l'arbre et contenant les masses compensatrices, le dispositif comportant des moyens d'entraînement solidaires du boîtier pour entraîner les masses compensatrices dans les deux sens de rotation.

Un tel dispositif est utilisé pour équilibrer dynamiquement et éliminer les vibrations produites par un défaut d'équilibre d'un arbre tournant ou de la charge entraînée par cet arbre. L'élimination de ces vibrations est particulièrement importante dans les machines à meuler de précision, à scier, les tours et autres machines-outils et aussi plus particulièrement dans les turbines et les ventilateurs tournant à grandes vitesses.

Les équilibreurs dynamiques de balourd connus sont formés d'un boîtier contenant une ou plusieurs masses compensatrices annulaires qui peuvent être déplacées circulairement en sens horaire ou en sens inverse de manière à compenser le balourd rencontré sur la charge qui peut être une meule ou une pièce à usiner. Ces déplacements peuvent être commandés manuellement ou automatiquement par des moteurs électriques. Les vibrations créées par le balourd sont détectées par un capteur ou transducteur connu monté sur la machine qui délivre des signaux proportionnels à ces vibrations à un appareil électronique contrôleur analyseur de vibrations connu qui indique la grandeur du balourd à corriger, les signaux de sortie de cet appareil étant susceptibles de commander les moteurs d'entraînement des masses compensatrices qui sont déplacées jusqu'à ce que les vibrations détectées par le capteur soient éliminées. Cependant, les moteurs électriques étant contenus dans le boîtier, il est nécessaire de prévoir des anneaux collecteurs et des balais ou contacts glissants pour les alimenter à partir d'une source d'énergie électrique externe. Sachant que le boîtier fixé à l'arbre tournant peut atteindre des vitesses de plusieurs milliers de tours par minute, il est nécessaire d'assurer un bon contact entre les éléments fixes et les anneaux collecteurs. Ce problème est d'autant plus difficile à résoudre que certaines machines, par exemple les machines à meuler utilisent de l'huile ou de l'eau comme lubrifiant, ce liquide se répandant et giclant partout dans la machine et pouvant corroder les contacts électriques alimentant le moteur si des joints d'étanchéité adéquats ne sont pas prévus entre les éléments stationnaires et le boîtier tournant de l'équilibreur. Même dans les turbines et les ventilateurs, la poussière et certaines particules peuvent donner lieu à des problèmes de contact.

En conséquence, le but de la présente invention est de réaliser un dispositif pour entraîner au moins une masse compensatrice d'un équilibreur dynamique utilisé sur les rectifieuses et d'autres machines, ne présentant pas les défauts mentionnés ci-dessus des dispositifs connus. Pour atteindre ce but, le dispositif selon l'invention est réalisé comme décrit dans la partie caractérisante de la revendication 1.

Les moyens d'entraînement étant commandés de l'extérieur par un fluide, il n'est plus nécessaire de prévoir des moteurs d'entraînement montés dans le boîtier, de sorte que les problèmes de contacts électriques sont éliminés.

Dans une deuxième forme d'exécution de l'invention, l'entraînement des masses compensatrices annulaires se fait par friction entre une roue liée à chaque anneau par une réduction à engrenages et la paroi orientable d'un canal dans lequel passe la roue à chaque révolution du boîtier. La roue est mise en rotation sur elle-même lors de chaque passage dans le canal, pour autant qu'elle vienne en contact avec la paroi orientable de ce canal. Cette solution permet aussi d'éliminer tout moteur électrique d'entraînement des anneaux ainsi que les problèmes de contacts électriques liés à ces moteurs.

Dans la troisième forme d'exécution, l'entraînement des anneaux est fait, comme dans la première forme d'exécution, par des moyens d'entraînement commandés par un fluide, mais par l'intermédiaire d'arbres coaxiaux, ce qui conduit à une exécution très compacte de du dispositif.

L'invention va être décrite plus en détail ci-après à l'aide du dessin d'exemples d'exécution.

La figure 1 est une vue en perspective d'un équilibreur selon une première forme d'exécution de l'invention, monté sur une machine à meuler,

La figure 2 est une vue frontale agrandie de l'équilibreur selon fig.1,

La figure 3 est une vue en plan d'un anneau utilisé dans l'équilibreur selon l'invention,

La figure 4 est une vue partielle d'une turbine avec un train d'engrenages pour la mise en rotation de l'anneau selon fig.3,

La figure 5 est une coupe agrandie selon la ligne 5 - 5 de la fig.2,

La figure 6 est une coupe agrandie selon la ligne 6 - 6 de la fig.2,

La figure 6A est une coupe partielle agrandie selon la ligne 6A - 6A de la fig.2,

La figure 7 est une coupe agrandie d'un distributeur de fluide de l'équilibreur selon fig.1,

La figure 8 est une vue partielle en coupe d'un dispositif d'entraînement en rotation des anneaux selon une deuxième forme d'exécution de l'invention,

La figure 9 est une vue partielle en coupe du dispositif selon fig.8,

La figure 10 est une vue latérale montrant le montage de l'équilibreur selon l'invention sur une machine à équilibrer,

La figure 11 est une coupe longitudinale d'un équilibreur selon une troisième forme d'exécution de l'invention,

La figure 12 est une coupe selon la ligne XII-XII de la figure 11, et

La figure 13 est une vue arrière de l'équilibreur.

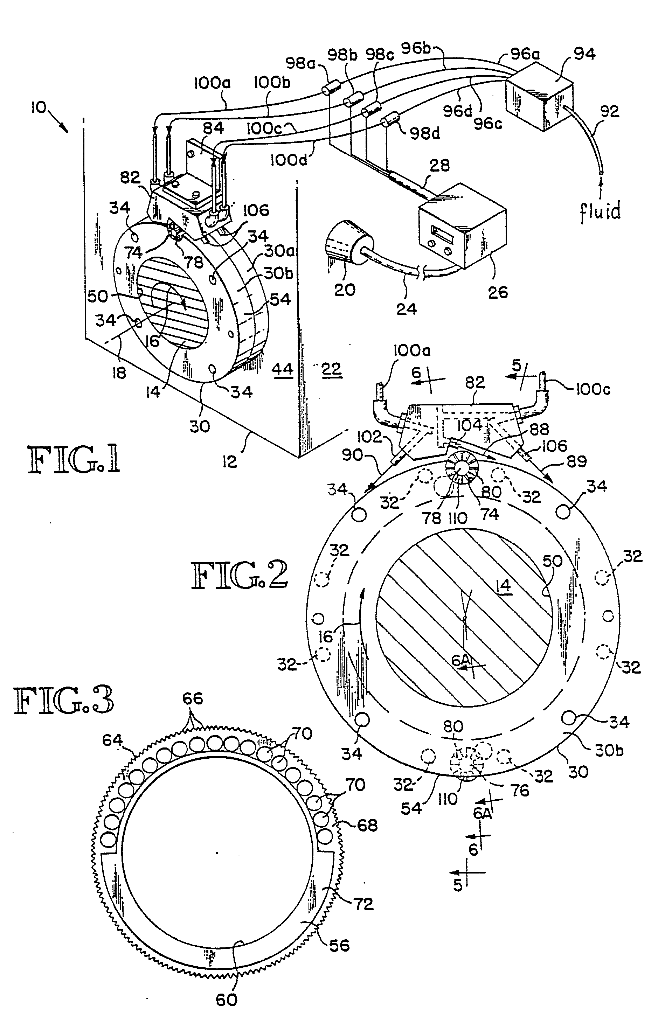

La figure 1 montre un équilibreur 10 prévu pour équilibrer dynamiquement une machine 12 avec un arbre dépassant 14, rotatif autour d'un axe 18 au moins dans une direction selon la flèche 16. L'équilibreur comprend un senseur ou capteur de vibrations 20 monté, par exemple magnétiquement, à une paroi latérale 22 de la machine 12. Le capteur 20 émet des signaux électriques représentatifs des vibrations de la machine, en particulier de celles créées par un défaut d'équilibre. Ces signaux sont délivrés à un câble 24 relié à un contrôleur/analyseur 26 qui délivre des signaux de commande sur un câble 28, ces signaux étant utilisés pour commander l'équilibreur 10. Le capteur de vibrations 20 et le contrôleur 26 sont en soi connus.

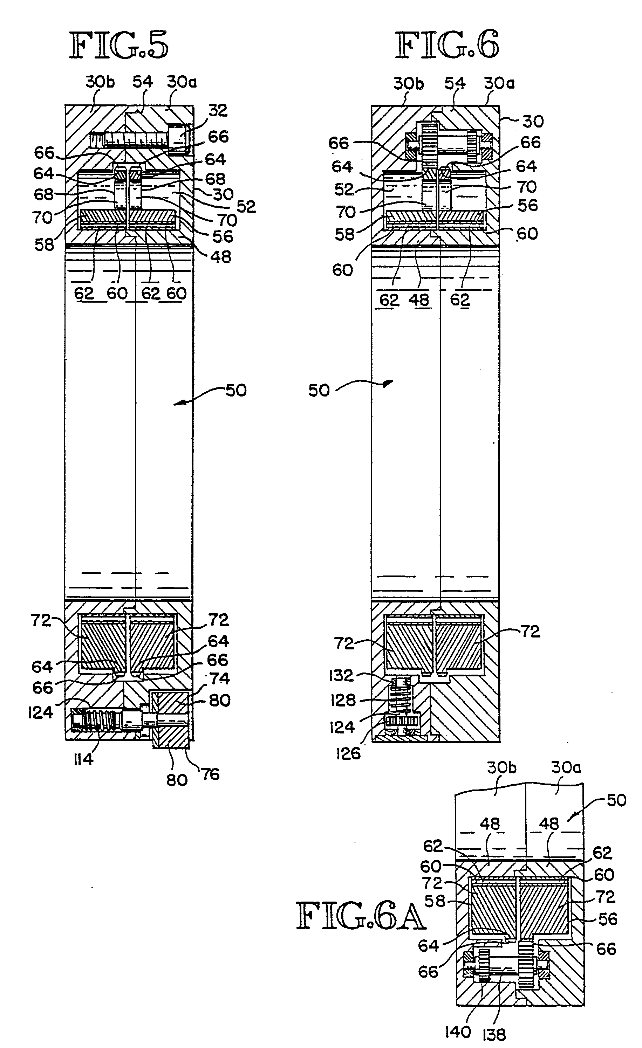

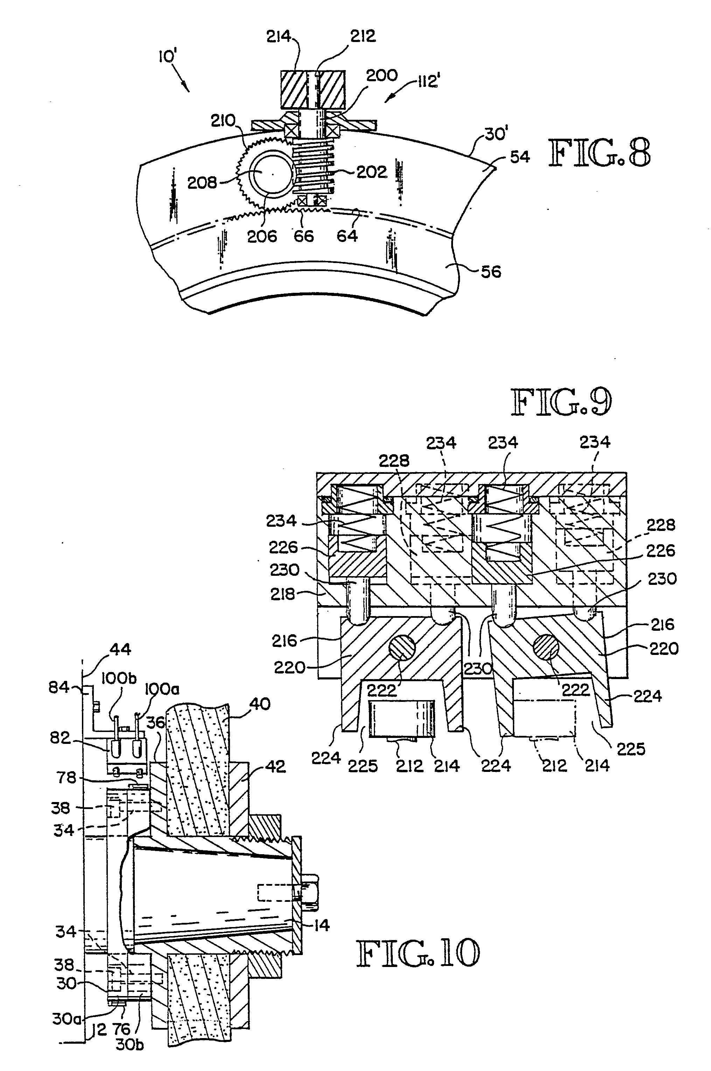

L'équilibreur comprend un boîtier 30 annulaire (figs. 5 et 6) formé de deux moitiés 30a et 30b liées entre elles par des vis de positionnement 32 (fig.2). Le boîtier 30 comprend des trous 34 traversant les moitiés 30a et 30b pour permettre sa fixation à l'arbre 14. Comme indiqué en figure 10, le boîtier est fixé par sa moitié 30b à une flasque 36 de l'arbre 14 à l'aide de vis 38. Bien que non représenté, la flasque 36 est en réalité une pièce séparée et elle forme une partie de l'assemblage de la fig.10 utilisé pour monter de manière amovible une meule 40 sur l'arbre 14. Une flasque 42 montée de manière amovible à la flasque 36 maintient la meule 40 en position entre ces flasques.

Le boîtier 30 fixé à l'arbre 14 étant entièrement libre, il n'est plus nécessaire de monter l'équilibreur à l'extrémité libre de l'arbre comme habituellement, mais entre la flasque intérieure 36 et une paroi extérieure 44 de la machine. Il n'est donc plus nécessaire d'enlever l'équilibreur à chaque changement de meule 40. En outre, l'équilibreur 10 est situé à proximité immédiate de la meule 40, à l'intérieur par rapport à l'extrémité libre de l'arbre 14. De sorte qu'il n'ajoute aucun poids à l'extrémité libre de l'arbre, ce qui élimine tout déséquilibre axial de cet arbre. La disposition selon fig.10 montre que les masses ou anneaux compensateurs peuvent être réduits en poids car le défaut d'équilibre qu'elles doivent corriger est plus faible que dans la disposition connue avec équilibreur en bout d'arbre produisant lui-même un défaut d'équilibre.

Comme indiqué en figs.5 et 6, le boîtier annulaire 30 comporte une paroi interne 48 formée par la juxtaposition des parties correspondantes des moitiés de boîtier 30a, 30b, cette paroi 48 délimitant une ouverture centrale 50 dans laquelle l'arbre 14 est chassé. Le boîtier 30 comprend une chambre annulaire 52 autour de l'ouverture 50 et coaxiale à l'arbre 14.

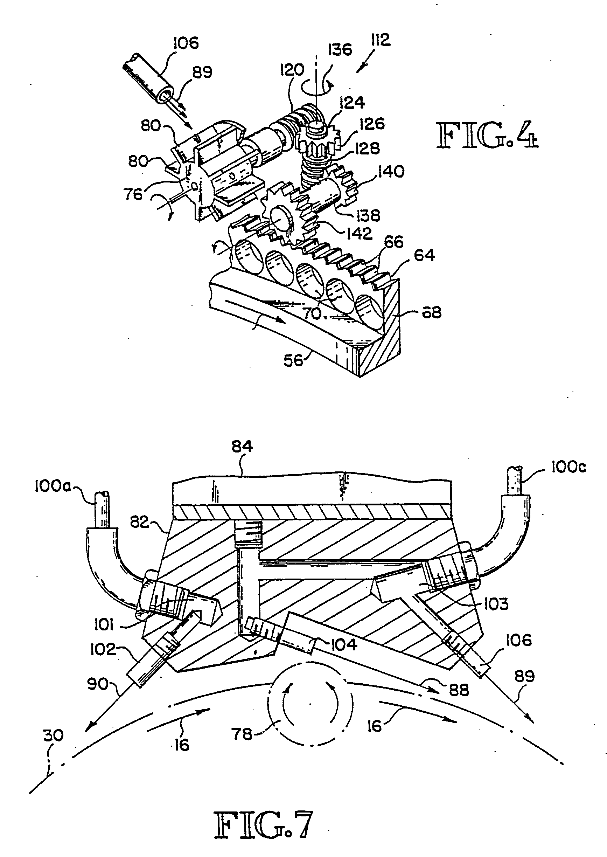

Dans la chambre 52 sont montés en juxtaposition les anneaux d'équilibrage 56 et 58 à répartition excentrée de la masse. L'anneau intérieur 56, identique à l'anneau extérieur 58, est représenté en fig.3. L'anneau comprend une ouverture centrale 60 (figs.3,5,6) de diamètre plus grand que celui de la paroi 48, pour créer un espace libre entre eux dans lequel est déposée une paire de paliers flexibles 62 comprenant des paliers à aiguilles orientés axialement. De cette manière, la paroi 48 supporte de manière rotative chacun des anneaux compensateurs 56 et 58, ces anneaux étant susceptibles de tourner dans les deux sens de rotation indépendamment l'un de l'autre et du boîtier 30.

L'anneau 56 selon fig.3 est pourvu d'une denture 66 à sa surface périphérique 64. Lorsque les anneaux 56 et 58 sont montés dans la chambre 52, ils tournent avec le boîtier 30 lorsque celui-ci est entraîné par l'arbre 14. Chaque anneau peut en outre être déplacé en rotation, dans chaque direction, par la denture 66. Ceci permet un déplacement individuel des anneaux dans le boîtier, l'un par rapport à l'autre et par rapport au boîtier. L'anneau intérieur 56 comprend une partie 68 d'épaisseur réduite s'étendant sur environ 180° et comprenant des trous 70 d'allègement. Cette disposition produit une répartition excentrée de la masse. La partie restante 72 de l'anneau est de pleine épaisseur. La fig.4 montre en détail la partie 68 de l'anneau 56 et les figures 5 et 6 montrent que les parties d'épaisseur réduite des anneaux sont juxtaposées et disposées vers le centre du boîtier.

Le dispositif selon l'invention comprend pour chaque moitié de boîtier 30a et 30b une turbine 76, 78 logée dans un dégagement 74 de la paroi périphérique 54. Chaque turbine est montée de manière rotative au boîtier 30, autour d'un axe parallèle à l'arbre 14. Les turbines sont supportées par le boîtier 30 qui tourne avec l'arbre 14 et chaque turbine peut aussi tourner autour de son propre axe. Les turbines comprennent une une pluralité d'aubes 80 dépassant vers l'extérieur, ces aubes étant soumises à un jet de fluide sous pression, tel qu'air, eau, huile, etc., pour mettre chaque turbine en rotation autour de son axe pendant au moins une partie du chemin circulaire selon lequel elle est entraînée durant chaque révolution du boîtier 30. La fig.5 montre que le dégagement 74 a une profondeur telle que chaque aube 80 dépasse vers l'extérieur de la paroi périphérique 54. Les turbines 76 et 78 peuvent être sélectivement mises en rotation dans les sens horaire et dans le sens inverse par un jet de fluide sous pression produit par un distributeur 82 monté à proximité du boîtier 30, à l'extérieur de celui-ci. Le distributeur 82 est fixé à la paroi 44 de la machine 12 par un fer cornière 84. Le distributeur est prévu pour mettre sélectivement en rotation les turbines lorsqu'elles passent sous ce distributeur, entraînées par le boîtier rotatif 30. Les turbines sont mises en rotation en réponse aux signaux émis sur le câble 28 par le contrôleur 26 sur la base des vibrations détectées par le capteur 20.

Comme indiqué en fig.2, le distributeur 82 produit un jet de fluide dans les directions 88, 89 et 90 pour mettre la turbine 78 en rotation dans le sens des aiguilles de la montre par les jets de fluide selon les directions 88 et 89 tangentes à la circonférence du boîtier 30, et dans le sens inverse par le jet de fluide selon la direction 90 tangente à la circonférence du boîtier 30. Un tel distributeur est associé à chaque turbine. Lorsque la turbine 78 est entraînée sous le distributeur 82 par le boîtier 30 tournant dans le sens horaire comme indiqué par les flèches 16 en figure 7, l'effet d'un jet de fluide selon les directions 88 et 89 est moins important que celui d'un jet selon la direction 90, ce qui explique que deux jets 88 et 89 soient prévus pour la rotation dans le sens des horaire. Le fluide est délivré à travers une conduite 92 par un générateur de fluide adéquat non représenté. La conduite 92 est reliée à un régulateur de pression 94 distribuant le fluide par quatre conduites 96a, 96b, 96c et 96d respectivement à quatre valves 98a, 98b, 98c et 98d. Les valves sont ouvertes et fermées en réponse aux signaux électriques délivrés par le contrôleur 26 à travers le câble 28.

Les valves 98a - 98d délivrent le fluide sous pression à travers quatre conduites 100a, 100b, 100c et 100d au distributeur 82. Comme indiqué en fig.7, la conduite 100a est connectée à un canal intérieur 101 qui délivre le fluide à une buse 102 qui délivre elle-même le jet 90 pour mettre la turbine 78 en rotation dans le sens inverse des aiguilles de la montre. La conduite 100c est connectée à un canal 103 du distributeur 82 qui délivre le fluide à une paire de buses 104 et 106 délivrant elles-mêmes respectivement les jets 88 et 89 pour mettre en rotation la turbine dans le sens horaire. De manière générale, les conduites 100b et 100d alimentent en fluide les canaux 101 et 103 et les buses 102, 104 et 106 de l'autre turbine. Alors qu'en fig.1 les turbines sont disposées axialement l'une à côté de l'autre, chacune sur une moitié du boîtier 30, la fig.2 montre que les turbines 76 et 78 sont décalées angulairement, par exemple de 180°, à la périphérie du boîtier 30 pour isoler chaque turbine des jets de fluide délivrés à l'autre turbine. En outre, une disposition avec décalage de 180° donne une répartition équilibrée des masses des turbines sur le boîtier 30.

Les turbines 76, 78 du dispositif permettent de positionner les anneaux d'équilibrage 56 et 58 relativement l'un à l'autre et par rapport au boîtier 30 de manière à compenser entièrement tout défaut d'équilibre de l'arbre 14 ou de la meule 40, resp. de la charge. Les anneaux 56 et 58 sont chacun mis en rotation à partir de la turbine par un train d'engrenages réducteur 120-142 illustré en fig.4. Le dernier engrenage 142 engrène avec la denture 66 de l'anneau 56 et met celui-ci en rotation. Comme indiqué ci-dessus, il est clair que la turbine est mise en rotation sous l'action du fluide chaque fois qu'elle passe sous le distributeur, entraînée par la rotation du boîtier 30. Chaque train d'engrenage a par exemple un facteur de réduction de 5000:1, de sorte que plusieurs tours de la turbine sont nécessaires pour produire une révolution complète de l'engrenage 142. Le nombre de tours de la turbine à chaque révolution du boîtier 30 sous le distributeur dépend de la pression du fluide et de la vitesse de rotation de l'arbre 14. Par exemple, si l'arbre 14 tourne à 1500 t/min, et en admettant que la turbine tourne de 1/2 à 4 révolutions chaque fois qu'elle passe sous le distributeur, et avec une réduction du train d'engrenages 112 demandant 14 tours de la turbine pour tourner l'anneau 56 de 1° par rapport au boîtier, il faudra 3,5 à 28 passes de la turbine sous le distributeur pour tourner l'anneau de 1°.

Le temps nécessaire pour obtenir l'équilibrage peut être influencé simplement en ajustant la pression du fluide. Cette pression peut être réglée en fonction de la vitesse de l'arbre. Lorsque l'équilibrage est atteint, les valves qui étaient ouvertes lors du réglage sont fermées et le train d'engrenages avec son rapport de réduction élevé empêche toute rotation des turbines, respectivement tout déplacement intempestif des anneaux 56 et 58. En cas de correction manuelle, le contrôleur 26 peut être utilisé pour afficher la grandeur du défaut d'équilibre et la direction de rotation des anneaux nécessaire pour obtenir la correction. Des valves à commande manuelle doivent être prévues.

Les figures 8 et 9 illustrent une autre forme d'exécution possible de l'entraînement des anneaux 56 et 58. L'équilibreur 10' comprend un boîtier 30' et des anneaux 56 et 58 identiques à ceux de la première forme d'exécution selon fig.1. Comme dans cette dernière, des trains d'engrenages de réduction 112' sont utilisés, le train d'engrenage 200-210 commandant l'anneau 56 étant représenté en fig.8. Une extrémité 212 de l'arbre 200 dépasse de la paroi périphérique 54 du boîtier 30' et elle comporte une roue d'engagement à friction 214 dont la surface extérieure est revêtue de caoutchouc. La figure 9 montre que chaque anneau intérieur et extérieur 56 et 58 est interconnecté avec les roues d'engagement à friction intérieure et extérieures 214. Dans ce cas, il n'existe pas de distributeur de fluide mais un canal de contact allongé 216 qui est utilisé en liaison avec les roues d'engagement à friction 214. Chaque canal 216 comprend un corps 220 monté de manière tournante sur un pivot 222 d'une console 218 fixée à une paroi stationnaire de la machine 12 et chaque canal 216 peut pivoter dans les deux directions autour du pivot 222 en réponse aux signaux du contrôleur 26. Chaque canal comporte une paire de parois latérales 224 qui déterminent entre elles un canal ouvert 225 dans lequel passe la roue d'engagement 214. En position neutre du canal 216, la roue 214 entraînée par le boîtier 30' passe librement à travers l'ouverture 225 du canal 216, sans contact avec les parois latérales 224. Dans ce cas, la roue 214 n'est pas mise en rotation sur elle-même. Le corps 220 peut tourner autour du pivot 222 de manière que l'une ou l'autre de ses parois latérales 224 vienne en contact avec la roue 214 entraînée par la rotation du boîtier 30', ce qui a pour effet de mettre en rotation sur elle-même la roue 214, dans l'une ou l'autre direction. Cette rotation est transmise par le train d'engrenages 112' à l'anneau 56 pour corriger un défaut d'équilibre comme dans la première forme d'exécution. Le nombre de tours de la roue 214, à chaque passage du canal 225, dépend de la longueur du canal 225, resp. des parois latérales 224 de ce canal. En fig.9, le canal 216 de droite est illustré en contact par sa paroi 224 de gauche avec la roue 214, ce qui détermine un sens de rotation bien défini de cette roue. Si le canal 216 était en contact avec la roue 214 par sa paroi latérale de droite, le sens de rotation de la roue 214 serait inversé pour un sens constant de rotation du boîtier 30'. La fig.9 montre encore que le canal 216 de gauche est en position médiane ou neutre et que la roue 214 correspondante n'est pas entraînée en rotation.

Les corps 220 sont mis en rotation autour du pivot 222 par des éléments de commande à piston 226 et 228, pour chaque canal 216. Chaque élément comporte une paire de tiges d'engagement 230. Chaque tige supporte un ressort 234 qui applique une force en direction du canal 216, ces ressorts ont un effet d'autocentrage sur les canaux 216 en position neutre. Les forces de commande peuvent être appliquées par des valves à solénoïdes commandées automatiquement par le contrôleur 26 comme dans la première forme d'exécution. Il est aussi possible de prévoir une commande manuelle des corps 220.

Ce qui précède montre que, comme dans la première forme d'exécution, la commande en rotation des anneaux d'équilibrage est exécutée sans le secours d'un moteur électrique, de sorte que, dans cette seconde forme d'exécution, les problèmes liés aux moteurs électriques sont aussi éliminés.

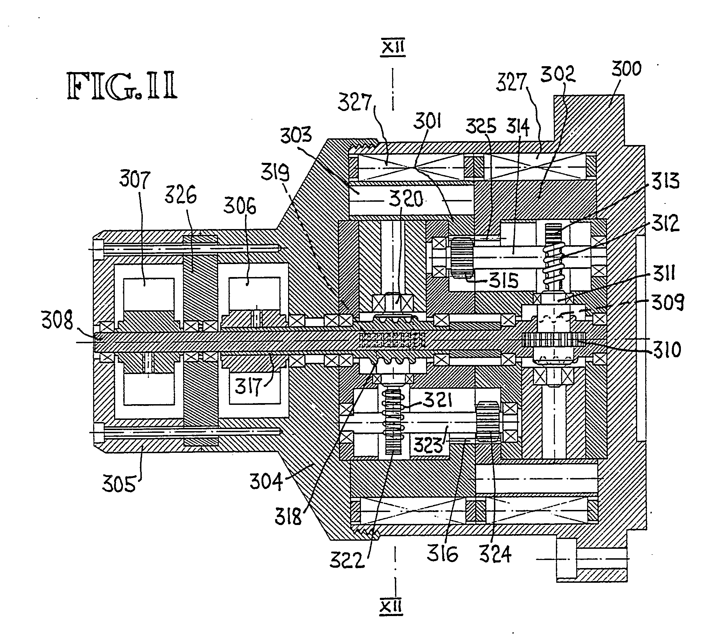

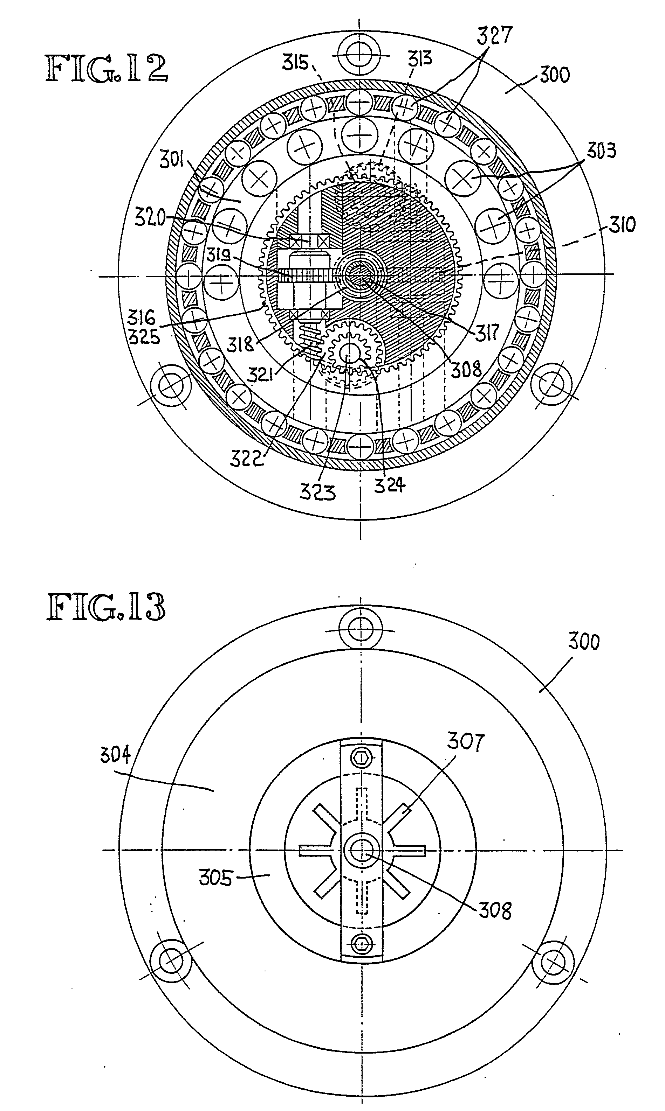

Les figures 11 à 13 illustrent une troisième forme d'exécution du dispositif selon l'invention. L'équilibreur comprend un boîtier 300 avec des masses compensatrices 301 et 302 porteuses de trous d'allègement 303 sur une moitié de leur circonférence. Un support 304, 305 de turbines est fixé à l'arrière du boîtier 300 lui-même monté sur l'arbre de la machine à équilibrer comme dans les deux autres formes d'exécution. Le dispositif comprend aussi deux turbines à aubes 306, 307, en principe identiques à celles de la première forme d'exécution, ces turbines étant susceptibles d'être mises en rotation dans un sens ou dans l'autre par un jet de fluide délivré par un générateur de fluide sous pression, d'un jeu de valves et d'un distributeur non représentés mais qui peuvent être les mêmes que ceux indiqués en figure 1. La principale différence avec l'exécution de la figure 1 réside dans l'entraînement par des arbres coaxiaux des anneaux compensateurs 301 et 302 à partir des turbines. La turbine 307 est montée sur un arbre 308 porteur d'un engrenage à vis sans fin avec un pignon 309 et d'une roue 310 engrenant avec le pignon. La roue 310 commande la rotation d'un arbre 311 également porteur d'un engrenage à vis sans fin avec un pignon 312 et une roue 313 qui met en rotation un arbre 314 porteur d'une roue dentée 315. La roue 315 engrène avec une denture intérieure 316 de l'anneau 301 pour mettre celui-ci en rotation indépendamment de l'autre anneau 302 et du boîtier 300,304, comme dans la première forme d'exécution. La figure 12 montre que les anneaux sont montés sur des paliers à rouleaux 327 pour faciliter la rotation et le centrage.

La seconde turbine 306 est montée sur un arbre creux 317 entourant l'arbre 308 de l'autre turbine et coaxial à cet arbre 308. L'arbre 317 porte un engrenage à vis sans fin avec un pignon 318 et une roue 319 engrenant avec le pignon. La roue 319 commande la rotation d'un arbre 320 également porteur d'un engrenage à vis sans fin avec un pignon 321 et une roue 322 qui met en rotation un arbre 323 porteur d'une roue dentée 324 qui engrène avec une denture intérieure 325 de l'anneau 302 pour mettre celui-ci en rotation indépendamment de l'autre anneau 301 et du boîtier 300, 304, comme dans la première forme d'exécution. Les turbines 306 et 307 sont séparées axialement par un disque circulaire 326 qui permet d'éviter qu'un jet de fluide sur une turbine influence l'autre turbine.

Le dispositif selon la troisième forme d'exécution se présente sous une forme très compacte et de faible poids.

De manière générale, le dispositif peut entraîner soit une seule masse compensatrice annulaire, soit une ou deux paires de masses compensatrices annulaires, ces masses compensatrices ne devant pas obligatoirement être disposées les unes à côté des autres. Il est possible, par exemple, de disposer un anneau ou une paire d'anneaux de part et d'autre de la charge. De même, les turbines peuvent avoir un nombre d'aubes différent selon l'utilisation prévue du dispositif, la vitesse de rotation de l'arbre, la pression et le genre de fluide.

## Revendications

1. Dispositif pour entraîner au moins une masse compensatrice (56,58) d'un équilibreur dynamique utilisé sur les rectifieuses et autres machines (12) avec un arbre tournant (14) supportant une charge, l'équilibreur comportant un boîtier (30) monté sur l'arbre et contenant les masses compensatrices, le dispositif comportant des moyens d'entraînement solidaires du boîtier pour entraîner les masses compensatrices dans les deux sens de rotation, caractérisé en ce que les moyens d'entraînement (76,78) des masses compensatrices (56,58) sont commandés de l'extérieur du boîtier (30) par un jet de fluide sous pression en réponse aux signaux d'un capteur de vibrations (20) monté sur la machine (12).

2. Dispositif selon la revendication 1, caractérisé en ce que les masses compensatrices sont en forme d'anneaux (56,58) comprenant une zone pleine (72) et une zone allégée (68) pour créer une distribution excentrée de la masse des anneaux compensateurs.

3. Dispositif selon la revendication 1 ou 2, caractérisé en ce que les moyens d'entraînement des anneaux (56,58) comprennent une turbine (76,78) d'entraînement pour chaque anneau (56,58), chaque turbine étant montée à la périphérie du boîtier (30) et comprenant des aubes dépassantes (80), soumises à l'action d'un jet de fluide sous pression, pour mettre la turbine en rotation sur elle-même, chaque turbine (76,78) étant connectée à l'anneau associé par un train d'engrenages réducteur (112) commandant la rotation de l'anneau (56,58).

4. Dispositif selon la revendication 3, caractérisé en ce que les turbines (76,78) sont disposées axialement l'une à côté de l'autre à la périphérie du boîtier (30) avec leur axe parallèle à celui de la machine.

5. Dispositif selon la revendication 3, caractérisé en ce que les turbines (76,78) sont disposées chacune à la périphérie du boîtier (30), mais avec un décalage angulaire relatif.

6. Dispositif selon l'une des revendications 3 à 5, caractérisé en ce que chaque turbine (76,78) est alimentée par un jet de fluide délivré par un distributeur de fluide (82) monté à l'extérieur du boîtier (30), à proximité immédiate de la périphérie de celui-ci et susceptible de produire au moins un jet de fluide dirigé tangentiellement à la circonférence du boîtier (30) pour faire tourner la turbine (76,78) à volonté dans l'un ou l'autre sens de rotation lorsqu'elle passe sous le distributeur (82) au cours de sa rotation avec le le boîtier (30), resp. l'arbre (14).

7. Dispositif selon l'une des revendications 1 à 9, caractérisé en ce que le fluide est de l'air, eau, huile, etc. sous pression.

8. Dispositif pour entraîner au moins une masse compensatrice (56,58) d'un équilibreur dynamique utilisé sur les rectifieuses et autres machines (12) avec un arbre tournant (14) supportant une charge, l'équilibreur comportant un boîtier (30) monté sur l'arbre et contenant les masses compensatrices, le dispositif comportant des moyens d'entraînement (214) solidaires du boîtier pour entraîner les masses compensatrices dans les deux sens de rotation, caractérisé en ce que les moyens d'entraînement (214) des masses compensatrices (56,58) sont commandés au cours de leur déplacement circulaire dû à la rotation du boîtier (30') par contact de frottement avec un élément extérieur (216) au boîtier (30') en réponse aux signaux d'un capteur de vibrations (20) monté sur la machine.

9. Dispositif selon la revendication 8, caractérisé en ce que les moyens d'entraînement comprennent une roue d'engagement (214) pour chaque masse compensatrice (56,58), cette roue étant connectée à la masse correspondante par un train d'engrenage réducteur (112'), la roue (214) dépassant de la périphérie du boîter (30') et tournant avec celui-ci.

10. Dispositif selon l'une des revendications 8 ou 9, caractérisé en ce qu'il comprend pour la commande de chaque masse compensatrice (56,58) un élément (216) monté sur la machine et comportant des parois latérales (224) délimitant entre elles un canal ouvert (225) traversé par la roue d'engagement (214) à chaque révolution du boîtier (30'), l'élément (216) étant susceptible de basculer autour d'un pivot stationnaire (222) en réponse aux signaux du capteur de vibrations (20), de manière que chaque paroi latérale (224) vienne en contact avec un côté de la roue d'engagement (214) pour la mettre en rotation sur elle-même par contact de roulement, chaque fois qu'elle traverse le canal (225).

11. Dispositif selon la revendication 10, caractérisé en ce que chaque élément (216) est commandé en pivotement par des pistons (226, 228) recevant un fluide sous pression délivré par un jeu de valves (98a-98d) en réponse aux signaux du capteur de vibrations (20) traités par un contrôleur/analyseur (26).

12. Dispositif pour entraîner au moins une masse compensatrice (301,302) d'un équilibreur dynamique utilisé sur les rectifieuses et autres machines (12) avec un arbre tournant (14) supportant une charge, l'équilibreur comportant un boîtier (300,304,305) monté sur l'arbre et contenant les masses compensatrices (301,302), le dispositif comportant des moyens d'entraînement soli daires du boîtier pour entraîner les masses compensatrices dans les deux sens de rotation, caractérisé en ce que les moyens d'entraînement (306, 307) des masses compensatrices (301,302) sont commandés de l'extérieur dans chaque sens de rotation par un jet de fluide sous pression en réponse aux signaux d'un capteur de vibrations monté sur la machine, les moyens d'entraînement (306,307) étant mortés dans l'équilibreur (300,304,305) l'un à côté de l'autre, le long de l'axe de l'arbre tournant (14) de la machine (12), chaque moyen d'entraînement étant relié à la masse compensatrice associée par un train d'engrenage réducteur (309-315;318-324).

13. Dispositif selon la revendication 12, caractérisé en ce que les moyens d'entraînement des masses compensatrices en forme d'anneaux sont des turbines (306,307) dont les axes sont coaxiaux et relient chacune des turbines aux masses compensatrices (301,302) par un train d'engrenage réducteur (309-315; 318-324).

FIG.1

FIG.2

FIG.3

EP 0 318 627 A1

FIG. 4

FIG. 7

# FIG.5

# FIG.6

# FIG.6A

FIG. 8

FIG. 9

FIG. 10

FIG. 11

FIG.12

FIG.13

Europäisches
Patentamt

EUROPÄISCHER RECHERCHENBERICHT

Nummer der Anmeldung

EP 87 81 0713

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 727 027 (KAISER et al.) <br> * revendication 1 * <br> --- | 1 | G 01 M 1/06 <br> G 01 M 1/36 |
| A | DE-A-3 314 287 (HOFMANN GMBH & CO. KG) <br> * revendications 1-5 * <br> ----- | 1 | |

**RECHERCHIERTE SACHGEBIETE (Int. Cl.4)**

B 23 B 39/00
B 23 B 45/00
B 23 B 47/00
B 24 B 47/00
B 23 Q 5/00
G 01 M 1/00

Der vorliegende Recherchenbericht wurde für alle Patentansprüche erstellt

| Recherchenort | Abschlußdatum der Recherche | Prüfer |
|---|---|---|
| BERLIN | 30-07-1988 | DIETRICH A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
    Dokument